# EUROPÄISCHE PATENTANMELDUNG

(11) **EP 0 563 544 A1**
(43) Veröffentlichungstag der Anmeldung: **06.10.1993**
(21) Anmeldenummer: 93101972.3
(22) Anmeldetag: 09.02.1993
(51) Int. Cl.: B60J 3/02

(54) **Sonnenblende für Kraftfahrzeuge**

(30) Priorität: 31.03.1992 DE 4210644
(71) Anmelder: Bayerische Motoren Werke Aktiengesellschaft, 80788 München (DE)
(72) Erfinder: Reis, Wolfgang, W-8000 München 40 (DE)

(57) **Zusammenfassung**

Eine Sonnenblende (1) besteht aus einem Blendschutzkörper (2) und einem Erweiterungsteil (6), das über eine Mechanik beim Verschwenken der Sonnenblende (1) zwangsgesteuert in Richtung der Breitenerstreckung der Sonnenblende (1) verschoben wird.

## Beschreibung

Die Erfindung bezieht sich auf eine Sonnenblende für Kraftfahrzeuge, insbesondere Personenkraftwagen, nach dem Oberbegriff des Anspruchs 1.

Die Form von Sonnenblenden, die in ihrer Ruhelage an der Innenverkleidung des Fahrzeugdaches anliegen, wird entscheidend von der Geometrie des Fahrzeugdaches und der Gestaltung der Innenverkleidung bestimmt. Während Windschutzscheiben in Personenkraftwagen üblicherweise die Form eines gleichschenkligen, krummlinigen Trapezes haben, bei dem die obere Grundlinie kürzer ist als die untere, ist das Fahrzeugdach annähernd rechteckig und schließt sich an die obere Grundlinie der Windschutzscheibe an. Somit entsteht in der Wirklage der Sonnenblende ein nicht schließbarer dreiecksförmiger Spalt zwischen Sonnenblende und A-Säule. Auch im Bereich des Innenrückspiegels verbleiben Freiflächen, die aus Gründen der Freigängigkeit von konventionellen Sonnenblenden nicht vollständig abgedeckt werden.

Aus der DE 19 05 361 A1 beispielsweise ist eine Sonnenblendschutzeinrichtung für Windschutzscheiben von Kraftfahrzeugen bekannt, die mit zusätzlichen Lichtschutzflächen versehen ist, die aus von den Stirnseiten zugänglichen Gleittunneln innerhalb der eigentlichen Sonnenblende ausziehbar sind, um die Sonnenblende nach beiden Seiten hin verbreitern zu können.

Nachteilig bei dieser bekannten Sonnenblende ist die umständliche Bedienung: Das Ausziehen und Einschieben der zusätzlichen Lichtschutzfläche erfolgt in einem für die Insassen ergonomisch ungünstigen Bewegungsablauf und bringt im Falle des Fahrzeuglenkers, der hierdurch vom Verkehrsgeschehen abgelenkt wird, ein gewisses Gefährdungspotential mit sich. Das Zurückverschwenken der seitlich erweiterten Sonnenblende ist nicht möglich; wird es dennoch versucht, kann es zu Funktionsstörungen an der Sonnenblende führen. Darüber hinaus entsteht bei den Fahrzeuginsassen hierbei der Eindruck einer unausgereiften Konstruktion.

Der vorliegenden Erfindung liegt daher die Aufgabe zugrunde, eine Sonnenblende zu schaffen, die in ihrer Wirklage eine größere Blendschutzfläche aufweist als in ihrer Ruhelage, dabei einfach und sicher mit einem Handgriff in ergonomisch günstiger Weise zu bedienen ist und ohne weiteres Zutun der Fahrzeuginsassen einen größtmöglichen Blendschutz bereitstellt.

Diese Aufgabe wird durch die kennzeichnenden Merkmale des Anspruchs 1 gelöst.
Die selbsttätige Erweiterung der Lichtschutzfläche bei einem der Bedienung einer konventionellen Sonnenblende entsprechenden Bewegungsablauf erfordert keinerlei Umdenken der Fahrzeuginsassen. Da sich der optimale Blendschutz jeweils automatisch einstellt, ist eine Erhöhung der aktiven Fahrsicherheit die Folge. Außerdem entlastet der vereinfachte Bedienvorgang die Insassen und bringt somit einen Komfortgewinn. Der Fahrer kann sich voll auf das Verkehrsgeschehen konzentrieren.

Die vorteilhafte Ausgestaltung der Erfindung gemäß Anspruch 2 ermöglicht in einfacher Weise mit mechanischen Elementen die Umsetzung der Schwenkbewegung der Sonnenblende in eine Verlagerung des Erweiterungsteils.

Weitere die Erfindung ausgestaltende Merkmale sind in den Unteransprüchen 3 bis 6 enthalten.

Die Ausgestaltung der Erfindung gemäß Anspruch 7 bietet den Vorteil, daß die aufgrund der meist rechteckförmigen Gestalt der Sonnenblende nicht abgedeckten Bereiche der Windschutzscheibe nahe der A-Säule und/oder der im Bereich des Innenrückspiegels beim Herunterklappen der Sonnenblende automatisch mitabgedeckt werden. Darüber hinaus ist es selbstverständlich möglich, auch die fängenausdehnung einer Sonnenblende selbsttätig mit dem Verschwenken zu verändern. In der Praxis wird für diesen Fall jedoch in Abhängigkeit von der Körpergröße und Sitzposition der Fahrzeuginsassen sowie dem Sonnenstand eine individuelle Anpassungsmöglichkeit zusätzlich vorzusehen sein.

Die vorteilhafte Weiterbildung der Erfindung gemäß Anspruch 8 vermindert den Kraftaufwand beim Verschwenken der Sonnenblende und zeichnet sich durch hohe Funktionssicherheit sowie großen Bedienkomfort aus. Aus der DE 29 41 646 A1 ist zwar ein elektromagnetisch bewegbarer Blendschutz bekannt, der jedoch in seiner Gesamtheit durch Fremdkraft verschwenkt wird. Außerdem erfolgt die Steuerung des Elektromagneten willkürlich durch den Fahrer über Knopfdruck.

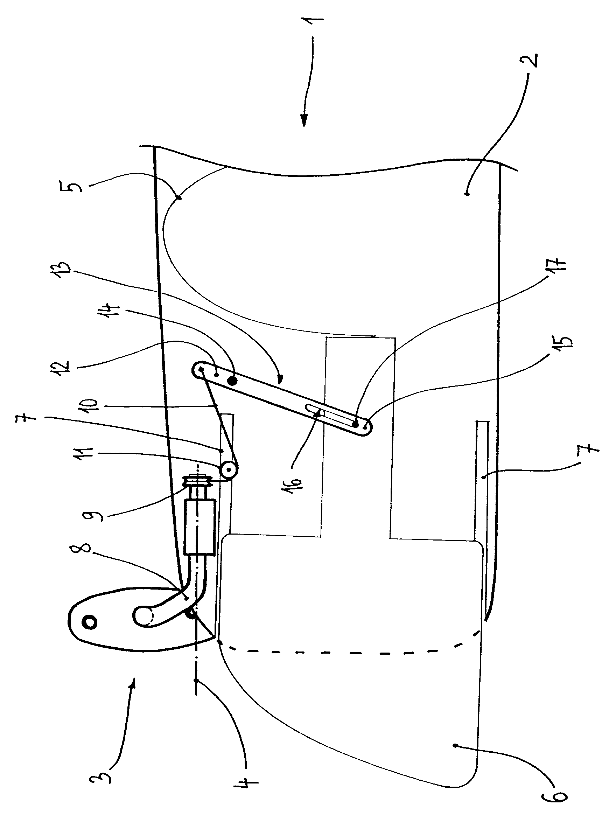

Ein bevorzugtes Ausführungsbeispiel der Erfindung wird in der Zeichnung nachfolgend näher beschrieben. Die einzige Figur zeigt eine erfindungsgemäße Sonnenblende an der linken Fahrzeugseite in ihrer Wirklage in der Ansicht in Fahrtrichtung, wobei zur Sichtbarmachung der einzelnen Elemente die obere Verkleidung und Polsterung der Sonnenblende nicht dargestellt ist.

An der in ihrer Gesamtheit mit 1 bezeichneten Sonnenblende kommt dem Blendschutzkörper 2 tragende Funktion zu. Der Blendschutzkörper 2 ist an seinem linken Endabschnitt über ein Lager 3 an der nicht näher dargestellten Innenverkleidung des Fahrzeugdaches befestigt und kann über eine etwa quer zur Fahrtrichtung liegende Schwenkachse 4 verschwenkt werden. Am linken Endabschnitt des Blendschutzkörpers 2 ist ein Erweiterungsteil 6 in zwei Gleitführungen 7 in Richtung der Breitenerstreckung der Sonnenblende 1 längsverschieblich geführt.

Am Lagerzapfen 8 des Lagers 3 ist eine Wickelrolle 9 drehfest und koaxial zum Lagerzapfen 8 angeordnet. Das erste Ende eines Seilzuges 10 ist an der Wickelrolle 9 derart befestigt, daß in der Wirklage der Sonnenblende 1 kein Seil auf der Wickelrolle 9 aufgewickelt ist. Der Seilzug 10 wird über eine in der Nähe der Wickelrolle 9 angeordnete Umlenkrolle 11, deren Drehachse senkrecht zur Schwenkachse 4 verläuft, umgelenkt. Das andere Ende des Seilzuges 10 greift an dem ersten Hebelarm 12 eines zweiarmigen Hebels 13 an, der über das Lager 14 am Blendschutzkörper 2 gelagert ist. Der zweite Hebelarm 15 des Hebels 13 ist mit einem Langloch 16 versehen, in das ein Verbindungsstift 17 eingreift, der seinerseits am Erweiterungsteil 6 befestigt ist.

Das Erweiterungsteil 6 wird über eine Feder 5 in Richtung des linken Endabschnitts der Sonnenblende 1, d. h. in Richtung zur A-Säule des Kraftfahrzeuges, gedrückt. In der Wirkstellung der Sonnenblende 1 befindet sich das Erweiterungsteil 6 in seiner exponierten Lage, wie in der Figur dargestellt. Wird die Sonnenblende 1 in ihre Ruhelage verschwenkt, so wickelt sich der Seilzug 10 auf einem Teil seiner Länge auf die Wickelrolle 9 auf und bewirkt hierdurch eine Verdrehung des Hebels 13 entgegen dem Uhrzeigersinn. Mit dem Hebel 13 wird über den Verbindungsstift 17 das Erweiterungsteil 6 gegen den Druck der Feder 5 eingefahren. Das Langloch 16 dient hierbei dem Längenausgleich am Hebel 13.

Mit Hilfe der oben beschriebenen Mechanik an der erfindungsgemäßen Sonnenblende 1 wird durch das Verschwenken des Blendschutzkörpers 2 eine translatorische Bewegung des Erweiterungsteils 6 in Richtung des fahrzeugäußeren Abschnittes der Sonnenblende 1 erzeugt. Ebenso ist es denkbar, das Erweiterungsteil 6 rotatorisch in seine Wirklage zu bringen. Neben einem am fahrzeugäußeren Abschnitt der Sonnenblende 1 angebrachten Erweiterungsteil 6 kann auch ein Erweiterungsteil vorgesehen sein, das eine Freifläche im Bereich des Innenrückspiegels abdeckt. Des weiteren ist es möglich, den Blendschutzkörper 2 senkrecht zur Schwenkachse 4 in seiner Längenausdehnung zu erweitern.

## Patentansprüche

1. Sonnenblende für Kraftfahrzeuge, insbesondere Personenkraftwagen, mit einem flächigen Blendschutzkörper, der in seiner Ruhelage etwa parallel zum Fahrzeugdach angeordnet ist und in seine Wirklage zur Windschutzscheibe verschwenkt werden kann, mit einem Erweiterungsteil, welches zumindest überwiegend innerhalb des Blendschutzkörpers angeordnet ist und aus diesem herausverlagert werden kann,
dadurch gekennzeichnet, daß beim Verschwenken der Sonnenblende (1) die Verlagerung des Erweiterungsteils (6) zwangsgesteuert erfolgt.

2. Sonnenblende für Kraftfahrzeuge nach Anspruch 1,
dadurch gekennzeichnet, daß die Verlagerung des Erweiterungsteils (6) über eine Wickelrolle (9), einen Seilzug (10) und einen Hebel (13) erfolgt.

3. Sonnenblende für Kraftfahrzeuge nach Anspruch 2,
dadurch gekennzeichnet, daß die Wickelrolle (9) drehfest und koaxial an einem Lagerzapfen (8) der Sonnenblende (1) angeordnet ist, daß das erste Ende des Seilzuges (10) an der Wickelrolle (9) befestigt ist und daß das zweite Ende des Seilzuges (10) am Hebel (13) angreift.

4. Sonnenblende für Kraftfahrzeuge nach Anspruch 2 und/oder Anspruch 3,
dadurch gekennzeichnet, daß der Seilzug (10) über eine im Bereich der Wickelrolle (9) angeordnete Umlenkrolle (11) geführt ist.

5. Sonnenblende für Kraftfahrzeuge nach mindestens einem der vorgenannten Ansprüche,
dadurch gekennzeichnet, daß der Hebel (13) als zweiarmiger, am Blendschutzkörper (2) gelagerter Hebel ausgeführt ist, an dessen erstem Hebelarm (12) der Seilzug (10) angreift und dessen zweiter Hebelarm (15) mit dem Erweiterungsteil (6) zusammenwirkt.

6. Sonnenblende für Kraftfahrzeuge nach mindestens einem der vorgenannten Ansprüche,
dadurch gekennzeichnet, daß das Erweiterungsteil (6) am Blendschutzkörper (2) geführt ist, wobei eine sich am Blendschutzkörper (2) abstützende Feder (5) auf das Erweiterungsteil (6) wirkt.

7. Sonnenblende für Kraftfahrzeuge nach mindestens einem der vorgenannten Ansprüche,
dadurch gekennzeichnet, daß das Erweiterungsteil (6) in Fahrzeugquerrichtung verlagerbar ist.

8. Sonnenblende für Kraftfahrzeuge nach Anspruch 1,
dadurch gekennzeichnet, daß die Verlagerung des Erweiterungsteils (6) durch eine elektrische Stelleinheit erfolgt, die von einem Sensor angesteuert wird, welcher die Relativbewegung zwischen Blendschutzkörper (2) und Fahrzeugdach erfaßt.
